# EUROPÄISCHE PATENTANMELDUNG

(11) **EP 2 015 264 A2**
(43) Veröffentlichungstag der Anmeldung: **14.01.2009**
(21) Anmeldenummer: 08011904.3
(22) Anmeldetag: 02.07.2008
(51) Int. Cl.: G07F 9/00

(54) **Containersystem zum Transport sowie zur Präsentation und Lagerung von Waren**

(30) Priorität: 03.07.2007 DE 102007030930
(71) Anmelder: Pfaff, Jürgen, 90592 Schwarzenbruck (DE)
(72) Erfinder: Pfaff, Jürgen, 90592 Schwarzenbruck (DE)
(74) Vertreter: Hafner, Dieter

(57) **Zusammenfassung**

Die Erfindung betrifft ein Containersystem zum Transport sowie zur Präsentation und Lagerung von Waren 2 in Einzelhandelsgeschäften, aufweisend einen Containerkörper 1, der in einem Produktaufnahmebereich 3 mit Produkten 2 bestückbar ist und aus dem die Produkte 2 über eine Öffnung 4 entnehmbar sind, sowie einer Informationseinrichtung 5 am Containerkörper 1, wobei der Container 1 über eine EDV-Schnittstelle 6 mit einer elektronischen Warenabfertigungseinrichtung 7 des Einzelhandelsgeschäftes und/oder einem dem Einzelhandelsgeschäft übergeordneten elektronischen Warenwirtschafts-datensystem 8 zum produktspezifischen Datentransfer verbunden ist, sowie an die Informationseinrichtung 5 des Containers 1 ein Signal zur Auslösung eines akustischen und/oder optischen Austauschsignal übertragbar ist, wenn die Warenabfertigungseinrichtung 7 und/oder das Warenwirtschaftsdatensystem 8 und/oder ein im Container 1 angeordneter Sensor 9 einen definierten Produktfüllstandswert ausgibt und/oder die im Warenwirtschaftsdatensystem 8 gespeicherten Produktverfallsdaten einen definierten Produktverfallsdatumswert erreicht oder überschritten haben.

## Beschreibung

Die Erfindung/Neuerung betrifft ein Containersystem zum Transport und zur Präsentation und Lagerung von Waren in einem Einzelhandelsgeschäft. Das Containersystem umfaßt Containerkörper, die einen Produktaufnahmebereich aufweisen, der mit Produkten bestückbar ist und aus diesem die Produkte über eine Öffnung entnehmbar gelagert sind. Darüber hinaus sind die Containerkörper mit einer Informationseinrichtung versehen.

Es ist übliche Praxis, Produkte in Containern zu transportieren und die Container mit entsprechenden Informationseinrichtungen zu versehen, um auf den Inhalt der Container hinzuweisen. Bei der Bestückung von Einzelhandelsgeschäften werden die Produkte aus dem Container entnommen und in dafür vorgesehene Regale eingelegt, wobei die Regale wiederum mit Informationseinrichtungen versehen sind, die den Preis, Artikelnummer und/oder Inhalts- sowie Produktangaben bereitstellen.

In den letzten Jahren hat es sich als problemhaft erwiesen, daß aufgrund eines relativ hohen Personal- und Verwaltungsaufwandes kleinere Geschäfte nicht mehr wirtschaftlich betrieben werden können und deswegen schließen müssen. Dies führt dazu, daß insbesondere ältere und/oder gehbehinderte Menschen gezwungen werden, relativ weite Wege - gegebenenfalls unter Einschaltung von öffentlichen Verkehrsmitteln oder Taxen - zurückzulegen und Supermärkte aufzusuchen, die sich regelmäßig im Stadtrandbereich etablieren. Die von Supermärkten angebotenen günstigeren Preise werden oftmals durch Fahrtaufwendungen oder durch erheblichen Zeitaufwand aufgehoben oder es wird sogar ein Mehraufwand zur Erledigung der täglichen Besorgungen erforderlich. Dies ist nachteilig.

Der Erfindung/Neuerung liegt die Aufgabe zugrunde, ein Containersystem mit den Merkmalen des Oberbegriffs des Anspruches 1 derart weiterzubilden, daß ein einfaches Handling, ein hoher automatisierter Verwaltungsaufwand, sowie eine Bestückung eines Einzelhandelsgeschäftes schnell, zuverlässig und auf einfache Weise von wenigen Personen ausgeführt werden können. Ferner ist es Aufgabe der Erfindung, Containerkörper des Containersystems derart auszugestalten, daß diese sowohl praktisch, als auch optisch ansprechend in ein Einzelhandelsgeschäft integrierbar sind.

Diese Aufgabe wird durch die Merkmale des Anspruches 1 gelöst, vorteilhafte Weiterbildungen der Erfindung ergeben sich aus den Unteransprüchen 2 - 15.

Als Kern der Erfindung wird es angesehen, daß die Container über eine EDV-Schnittstelle mit einer elektronischen Warenabfertigungseinrichtung des Einzelhandelsgeschäftes und/oder einem dem Einzelhandelsgeschäft übergeordneten elektronischen Warenwirtschaftsdatensystem zum produktspezifischen Datentransfer verbunden sind. Dabei soll an die Informationseinrichtung der Container ein Signal zur Auslösung eines akustischen und/oder optischen Austauschsignals übertragbar sein, das übertragen wird, wenn die Warenabfertigungseinrichtung und/oder das Warenwirtschafsdatensystem und/oder ein im Container angeordneter Sensor einen definierten Produktfiillstandswert ausgibt und/oder die im Warenwirtschaftsdatensystem gespeicherten Produktverfallsdaten einen definierten Produktverfallsdatumswert erreicht oder überschritten haben.

Die Container werden in den Verkaufsräumen des Einzelhandelsgeschäftes aufgestellt, die in ihnen bevorrateten Produkte werden von den Konsumenten unmittelbar aus ihnen entnommen und zur Warenabfertigungseinrichtung getragen. Da die Warenabfertigungseinrichtung jedes verkaufte Produkt registriert und diese Information vorzugsweise an ein übergeordnetes Warenwirtschaftsdatensystem weiterleitet, kann dieses wiederum auf den Restfüllstand der Containerkörper schließen und ab einem definierten Füllstandswert ein Austauschsignal sowohl an eine Warenkonfektionierungsstelle (Befüllungsort der Container mit Produkten) und/oder an ein Zentrallager und an die Informationseinrichtung des entsprechenden Containers ein vorzugsweise optisches Austauschsignal senden. Dies könnte beispielsweise derart ausgeführt sein, daß an einem Container eine rote und eine grüne LED angeordnet sind und im Falle eines niedrigen Produktfüllstands die rote LED leuchtet. Wenn nun in einer allgemeinen Befüllungsphase des Einzelhandelsgeschäftes dieses wieder generell mit Produkten aufgefüllt werden soll, kann dies auf einfache und komfortable Weise dadurch geschehen, daß eine Bedienperson lediglich die mit roten Lichtern versehenen Container durch entsprechende neu angelieferte Container ersetzt. Ein derartiger Austausch von ganzen Containerkörpern hat den Vorteil, daß dies innerhalb kürzester Zeit geschehen kann und die entnommenen, ganz oder teilweisen entleerten Container zu der Konfektionierungsstelle und/oder dem Zentrallager zurücktransportiert und wieder aufgefüllt werden können und schließlich über ein Signal aus dem Warenwirtschaftsdatensystem an ihrer Informationseinrichtung das rote Licht erlischt und ein grünes aufleuchtet, das wiederum signalisiert, daß dieser Container gefüllt ist und wieder in Einzelhandelsgeschäften positioniert werden kann. Neben der Verwendung der Informationseinrichtung der Container zur Signalisierung der Notwendigkeit des Austausches bezüglich des Produktfüllstandes kann ein derartiges System auch dazu verwendet werden, den Austausch von Produkten (insbesondere Lebensmittel), deren Produktverfallsdatum einen definierten Produktverfallsdatumswert erreicht oder überschritten haben, anzuzeigen. Die Produktverfallsdaten sind wiederum im Warenwirtschaftsdatensystem gespeichert.

Wird ein Einzelhandelsgeschäft, das mit relativ wenig Flächenaufwand betrieben werden kann, mit dem erfindungsgemäßen Containersystem ausgestattet, kann auf zusätzliche Lagerflächen verzichtet werden, auch ist der Betrieb eines solchen containersystembestückten Einzelhandelsgeschäftes im Prinzip mit nur einer Verkaufskraft an der Kasse möglich. Der gesamte Lagerhaltungsaufwand und Warenwirtschaftsaufwand entfällt oder wird stark reduziert, ein Transportfahrer, der die leeren oder halbleeren oder abgelaufenen Container vom Einzelhandelsgeschäft zur Zentrale zurückfördert und neue frisch bestückte Container anfördert, sorgt quasi für Lagerhaltung und Warenwirtschaft (Einräumen der Container und dergleichen) für mehrere Geschäfte, was sich ebenfalls als besonders wirtschaftlich erweisen dürfte. Um die Bestückung der Container an der Konfektionierungsstelle weiter zu erleichtern, ist es vorteilhaft, die Produkte in Trägern anzuordnen, die an vorgesehenen Bereichen innerhalb der Container einsetzbar sind. Derartige Träger können beispielsweise Einwegpappkartonträger oder vorzugsweise Kunststoffträger sein, die an die Verpackungsform der einzelnen Produkte angepaßt sind. Ferner ist es vorteilhaft, wenn die Träger eine elektronische Schnittstelle mit den Containern aufweisen, durch eine derartige Schnittstelle können die Träger einerseits mit einem Füllstandssensor versehen sein und über diesen Füllstandsdaten zu dem Container und über diesen an das Warenwirtschaftsdatensystem senden und andererseits können die Träger wiederum mit Informationseinrichtungen versehen sein und spezifisch zu den von den einzelnen Trägern aufgenommenen Produkten Informationen zu diesem bereitstellen.

In einer vorteilhaften Ausführungsform umfaßt die Informationseinrichtung des Containers und/oder des Trägers eine gotische Anzeige (LCD-Display, Steckkarte), die bevorzugt elektronisch arbeitet (LCD-Display), wobei diese Anzeige Geschäftsinformationen, Aufstellungsortinformationen und/oder Produktinformationen (z.B. Preis, Artikelnummer, Produktname, Hersteller) ausgibt. Welche und wie diese Informationen graphisch dargestellt sind, kann über die EDV-Schnittstelle zum Warenwirtschaftssystem gesteuert und geändert werden.

Damit die Container nicht nur ihrer Transportfunktion von der Konfektionierungsstelle/Zentrallager zu dem Einzelhandelsgeschäft gerecht werden, sondern auch innerhalb des Einzelhandelsgeschäftes ein optisch ansprechendes Erscheinungsbild aufweisen und die in ihnen bevorrateten Produkte vorteilhaft präsentieren können, ist es vorgesehen, die Container regalartig aufzubauen. Dabei können die Träger mit Rollos oder Türen versehen sein, um die Produkte beim Transport vor mechanischen Einflüssen zu schützen.

Als vorteilhaft hat es sich erwiesen, unterschiedliche Produkte auf den Trägern oder direkt in den Containern anzuordnen. Damit ist es nicht notwendig, für jedes Produkt einen eigenen Träger bzw. einen eigenen Container zur Verfügung zu stellen und damit können auch geringe Produktmengen in dem erfindungsgemäße Containersystem eingebracht werden, ohne dafür einen kompletten Träger und/oder Container auszulasten. Damit eignet sich das Containersystem auch für räumlich kleine Einzelhandelsgeschäfte, die dadurch ein relativ breites Produktsortiment anbieten können.

Im weiteren wird vorgeschlagen, die Container mit Rollen, Gleitelementen und/oder mit handelsüblichen Hubwägen korrespondierenden Bereichen zu versehen. Über derartige Einrichtungen lassen sich die Container einfacher und schneller sowohl innerhalb des Konfektionierungsortes/Zentrallagers, beim Auf- und Abladen am LKW, als auch zum Aufstellen und Abtransportieren von dem Einzelhandelsgeschäft handhaben.

Um in den Containern auch temperaturempfindliche Produkte zu lagern und transportieren zu können, ist es zweckmäßig, die Container mit einem Kühlaggregat zu versehen, das über eine Leistungsschnittstelle von extern mit Strom oder Kühlmittel gespeist werden kann. Dieses Kühlaggregat kann sowohl im Zentrallager, als auch im LKW, sowie im Einzelhandelsgeschäft betrieben werden, so daß die Kühlkette praktisch nicht abreißt, da die Versorgung der Kühlaggregate - wenn überhaupt - nur zwischen den einzelnen Stationen unterbrochen werden müßte.

Um die Attraktivität der Container als Präsentationseinrichtungen zu steigern, ist es zweckmäßig, die Container mit einer Beleuchtungseinrichtung zu versehen, die über eine Leistungsschnittstelle von außen gespeist werden kann. In diesem Zusammenhang ist es von Vorteil, die Beleuchtungseinrichtung in ihrer Beleuchtungsintensität, Ausleuchtungsstärke und/oder Beleuchtungsfarbe regelbar auszubilden. Damit wird es z.B. ermöglicht, die Beleuchtungsintensität, die Ausleuchtungsbereiche und/oder die Beleuchtungsfarbe über die EDV-Schnittstelle und/oder die Leistungsschnittstelle zu regeln, und damit produktspezifisch einzelne Container, einzelne Träger und/oder einzelne Produkte unterschiedlich zu beleuchten. Dies kann insbesondere durch die Einflußnahme des Warenwirtschaftsdatensystems geschehen, das mit der EDV-Schnittstelle der Container in Verbindung steht.

Im übrigen sei noch darauf hingewiesen, daß es vorteilhaft ist, innerhalb eines Containers artverwandte Produkte anzuordnen, wie beispielsweise in einem Container für Milcherzeugnisse unterschiedliche Joghurts, Käse, Quark und Milch zu plazieren und gegebenenfalls diesen Container mit Werbeflächen, die thematisch mit artverwandten Produkten in Verbindung stehen, zu versehen.

Zur Steigerung des Automatisierungsgrades und um Verpackungsmaterial einzusparen, kann es von Vorteil sein, wenn die Träger und/oder die Container von Herstellern und/oder Großhändlern mit Produkten bestückt werden. So ist es beispielsweise vorstellbar, daß die Hersteller ihre abgepackten Produkte über hausinterne Abfertigungsprozesse auf den Trägern und/oder den Containern plazieren und diese den Großhändlern und/oder den Einzelhandelsgeschäftsbetreibern zur Verfügung stellen. Damit würde beispielsweise der Schritt entfallen, nachdem die Produkte, die von Herstellerseite auf Euro-Paletten den Einzelhandelsgeschäftsbetreibern zugesandt werden von diesen überprüft, vereinzelt und in entsprechende Transport- und Präsentationseinrichtungen angeordnet werden müssen. Dies stellt eine vereinfachte Liefer-/Versorgungskette dar. Auch könnte bei der Einbindung des Zulieferers bzw. des Herstellers einzelner Produkte in das Warenwirtschaftsdatensystem und den diesen zugrundeliegenden Containern ein vereinfachter Informationsaustausch bei beispielsweise Produktengpässen oder bei unregelmäßigen Produktabverkauf erreicht werden.

In Weiterbildung der Erfindung erscheint es als vorteilhaft, wenn der Soll-Ist und/oder rechnerische Ist Inhalt sämtlicher Container eines Einzelhandelsgeschäftes über eine Ausgabeeinheit, die im entsprechenden Einzelhandelsgeschäft angeordnet ist, abfragbar ist. Über eine derartige Ausgabeeinheit kann die Person im Einzelhandelsgeschäft zu Kontrollzwecken eine Inventur durchführen und beispielsweise bei Diebstählen entwendete Produkte, deren Fehlen nicht über die Warenabfertigungseinrichtung registriert wurde, erkennen und gegebenenfalls Korrekturmaßnahmen in dem Warenwirtschaftsdatensystem durchführbar und/oder entsprechende Informationen an eine zentrale Stelle weiterleiten.

Schließlich betrifft Anspruch 15, daß das Transportmedium zum Transport der Container von einem Zentrallager zu einem Einzelhandelsgeschäft mit mindestens einer EDV- und/oder Leistungsschnittstelle versehen ist. Eine derartige Schnittstelle schafft einerseits eine nahezu lückenlose Ortbarkeit eines Produktes und darüber hinaus die Möglichkeit, während des Transportes die Container mit beispielsweise Strom für die Beleuchtung und die Kühlaggregate zu versorgen.

Die Erfindung wird anhand von Ausführungsbeispielen in den Zeichnungsfiguren näher erläutert. Diese zeigen
- Fig. 1: eine schematische Darstellung eines Containers und dessen Anbindung an eine Ladenkasse und ein Warenwirtschaftsdatensystem;

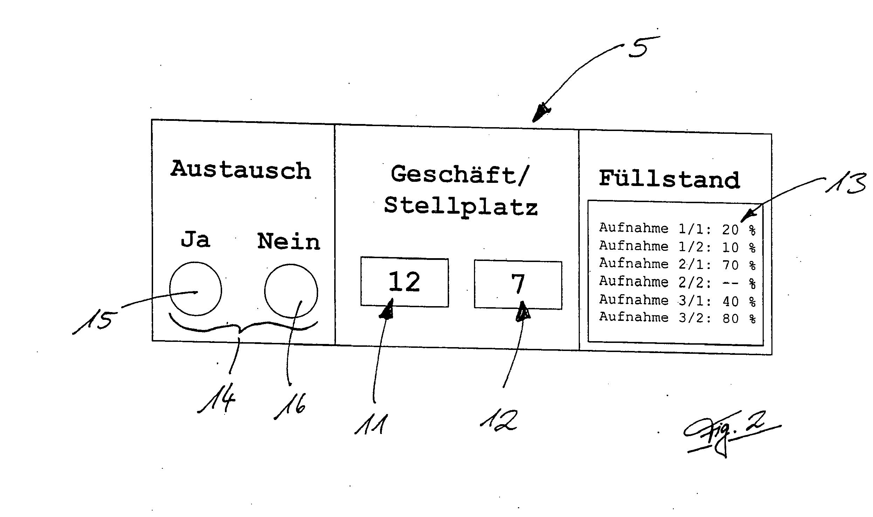

- Fig. 2: eine Detaildarstellung der Informationseinrichtung gemäß Fig. 1;

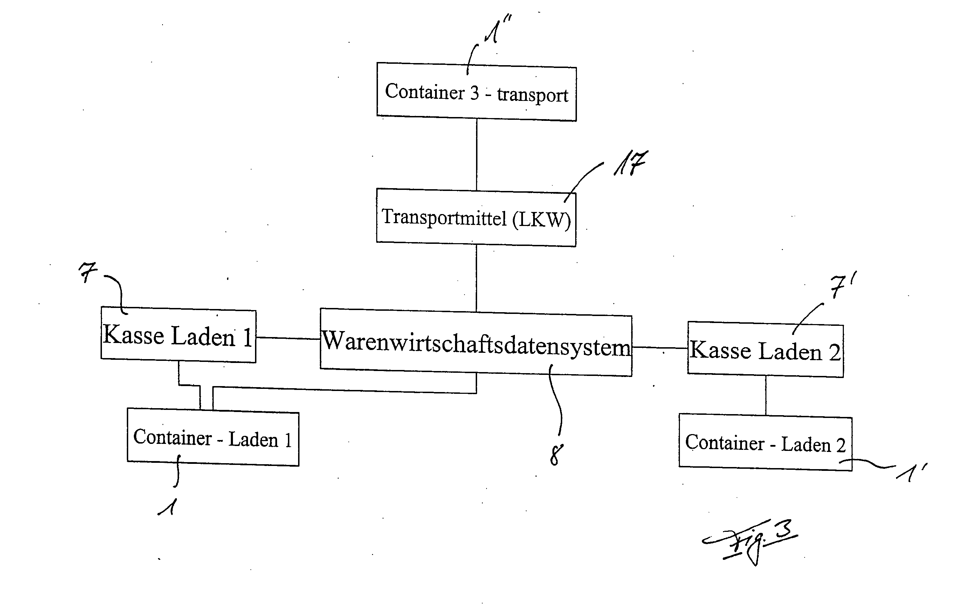

- Fig. 3: eine schematisches Blockdiagramm des Containersystems;
- Fig. 4: eine schematische Darstellung eines oberen Containerbereichs.

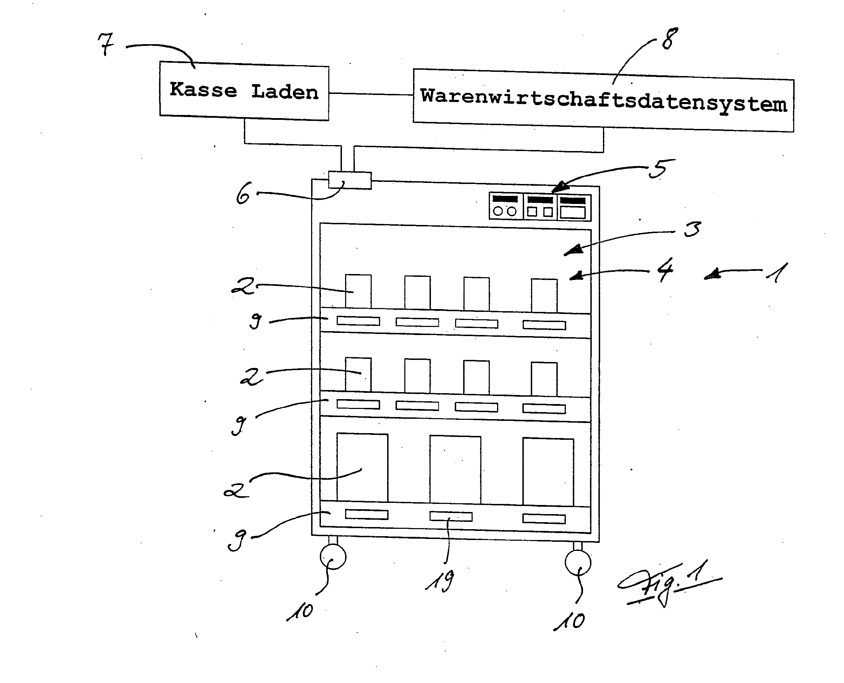

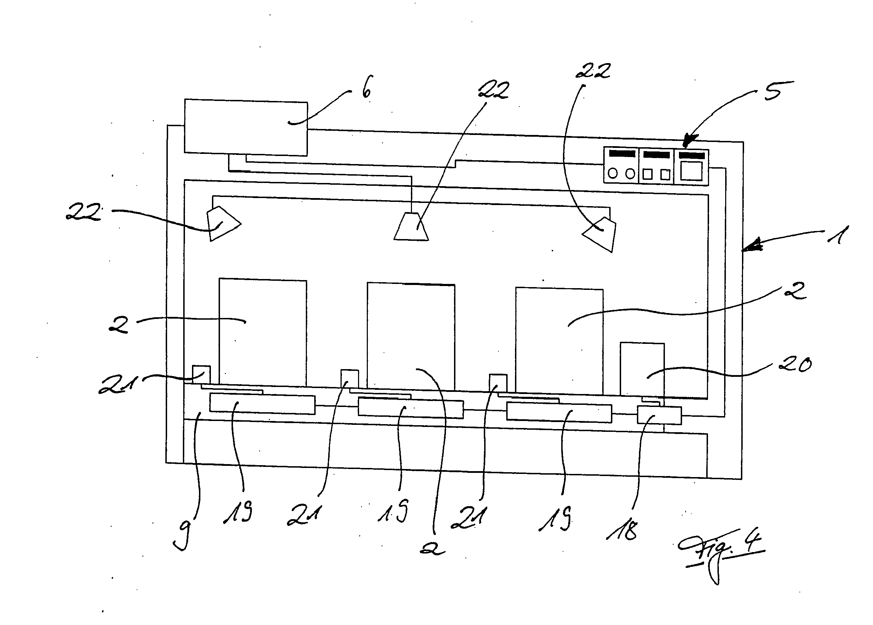

Figur 1 zeigt einen Container 1 eines Containersystems zum Transport und zur Präsentation und Lagerung von Waren und Produkten 2 in Einzelhandelsgeschäften. Der Containerkörper 1 weist einen Produktaufnahmebereich 3 auf, der mit Produkten 2 bestückbar ist und aus dem die Produkte 2 über eine Öffnung 4 entnommen werden können. Ferner weist der Containerkörper 1 eine Informationseinrichtung 5 sowie eine EDV-Schnittstelle 6 auf. Die EDV-Schnittstelle 6 ist mit einer elektronischen Warenabfertigungseinrichtung 7 (beispielsweise einer Kasse) und mit einem dem Einzelhandelsgeschäft übergeordnetem elektronischen Warenwirtschafts-datensystem 8 zum produktspezifischen Datentransfer verbunden. Die Informationen können leitungsgebunden oder über Funkschnittstellen übertragen werden. Die Informationseinrichtung 5 des Containers 1 gibt zumindest ein akustisches und/oder optisches Ausgangssignal aus, wenn die Warenabfertigungseinrichtung 7 und/oder das Warenwirtschaftsdatensystem 8 und/oder ein im Container 1 angeordneter Sensor 21 (vgl. Figur 4) einen definierten Produktfüllstandswert ausgibt und/oder die im Warenwirtschaftsdatensystem 8 gespeicherten Produktverfallsdaten einen definierten Produktverfallsdatumswert erreicht oder überschritten haben. Die Produkte 2 sind auf Trägern 9 angeordnet, die an entsprechenden Bereichen innerhalb des Containers 1 lösbar befestigt sind. Die Container 1 sind entweder selbst regalartig aufgebaut oder bilden mit den eingesetzten Trägern 9 eine Art Regalschrank.

Auf der Unterseite des Containers 1 ist dieser mit Rollen 10 versehen, alternativ können auch Gleitelemente und/oder mit Transportvorrichtungen korrespondierende Bereiche vorgesehen sein.

Die Containerfüllstandsdaten werden über den Abverkauf der Produkte 2 über die Warenabfertigungseinrichtung 7 ermittelt und dem Warenwirtschaftsdatensystem 8 übermittelt.

Zeichnungsfigur 2 stellt die Informationseinrichtung 5 in einer vorteilhaften Ausführungsform dar und weist eine optische Anzeige (z.B. LCD-Display) auf, die Geschäftsinformationen 11, Aufstellungsortinformationen 12 und produktspezifische Informationen 13 anzeigt, wobei in der dargestellten Ausführungsform die produktspezifischen Informationen 13 den Füllstand einzelner Aufnahmen bzw. Träger 9 und Trägerabschnitten ausgibt. Alternativ zu der Produktinformation 13 des Füllstandes können auch Produktpreisinformationen oder Produktartikelnummern dargestellt werden. Ein wesentlicher Bestandteil der Informationseinrichtung 5 ist die Containeraustauschinformation 14, die über die Leuchtmittel 15, 16 (beispielsweise LED) angibt, ob der Container 1 ausgetauscht werden muß - leuchtende LED 15 - oder ob der Container 1 nicht ausgetauscht werden muß - leuchtende LED 16. Die Geschäftsinformation 11 zeigt an, in welchem Geschäft der Container 1 zu plazieren ist, in der dargestellten Ausführungsform sind die Geschäfte durchnumeriert, alternativ könnten auch andere geschäftsspezifische Informationen 11, wie beispielsweise die Adresse angezeigt werden. Die Aufstellungsortsinformation 12 umfaßt ferner die Information, an welchem Ort/Stelle innerhalb eines bestimmten Geschäftes der Container 1 aufzustellen und am Warenwirtschaftsdatensystem 8 anzuschließen ist. Dies ist wiederum über eine Durchnumerierung der Stellplätze gelöst, alternativ könnte auch ein schematischer Lageplan mit einem entsprechend markierten Stellplatz für den jeweiligen Container 1 dargestellt werden.

In Zeichnungsfigur 3 ist ein schematisches Blockdiagramm dargestellt, das die Zusammensetzung des Containersystems aufzeigt. Das Warenwirtschafts-datensystem 8 steht sowohl mit den Warenabfertigungseinrichtungen 7, 7' als auch mit den einzelnen Containern 1, 1', 1" über deren EDV-Schnittstellen 6 in Verbindung. Damit wird es ermöglicht, daß das Warenwirtschaftsdatensystem 8 sowohl den Füllstand der einzelnen Container 1 über den Abverkauf der Produkte 2, der über die Warenabfertigungseinrichtung 7, 7' registriert wird, ermittelt wird, als auch über die direkte Verbindung der einzelnen Container 1 mit dem Warenwirtschaftsdatensystem 8 eine Steuerungsmöglichkeit zum Beeinflussen der Informationseinrichtung 5 besteht, um zumindest den Austausch am Container 1 zu signalisieren und gegebenenfalls weitere Produktinformationen 13 am Container 1 darzustellen. Ferner ist es möglich, das Warenwirtschaftsdatensystem 8 über beispielsweise eine Funk- oder Satellitenverbindung mit den Transportmitteln 17 zu verbinden und dadurch Informationen zu den im Transport befindlichen Containern 1" zuzuführen. Dies ist insbesondere dann sinnvoll, wenn während des Transportes des Containers 1" dessen Bestimmungsort geändert werden muß. Hierbei kann die den Container 1" aus dem LKW abladende Person auf einfache Weise auf der Informationseinrichtung 5 ablesen, für welchem Geschäft und an welchem Aufstellungsort dieser Container 1" plaziert werden soll.

Gemäß Zeichnungsfigur 4 ist es in einer vorteilhaften Ausführungsform vorgesehen, die Träger 9 mit einer elektronischen Schnittstelle 18 an die Container 1 anzubinden und über deren Schnittstelle 6 mit dem Warenwirtschaftsdatensystem 8 zu koppeln. Dies ist insbesondere dann von Vorteil, wenn die Träger 9 selbst mit Informationselementen 19 versehen sind, die beispielsweise wiederum Produktinformationen 13 auf z.B. elektronischen Anzeigen darstellen. Ferner weist der Träger 9 und/oder der Container 1 ein Kühlaggregat 20 auf, das über die Schnittstelle 18 bzw. 6 und/oder eine weitere Schnittstelle des Containers 1 von einer externen Stromversorgung gespeist wird.

Alternativ und/oder zusätzlich zur rechnerischen Ermittlung des Füllstandes der Container 1 über den Abverkauf durch die Warenabfertigungseinrichtung 7, 7' sind die Träger 9 mit Füllstandssensoren 21 ausgerüstet, die das Vorhandensein und/oder die Menge von Produkten 2 registrieren. Derartige Sensoren 21 ermöglichen auch automatisch eine Inventur durchzuführen, bei der der Soll-Ist und/oder rechnerische Ist Inhalt sämtlicher Container 1 eines Einzelhandelsgeschäftes ermittelt werden kann und mit dem tatsächlichen, über die Sensoren 21 erfaßten Ist-Inhalt, verglichen werden kann.

Im weiteren weist der Container 1 eine Beleuchtungseinrichtung 22 auf, die über eine Leistungsschnittstelle, beispielsweise die EDV-Schnittstelle 6 von extern mit Strom versorgt wird. In diesem Zusammenhang ist es von Vorteil, wenn die Beleuchtungseinrichtung 22 in ihrer Beleuchtungsintensität, ihren Ausleuchtungsbereichen und/oder ihrer Ausleuchtungsfarbe regelbar ist. Eine derartige Regelbarkeit läßt sich beispielsweise über die EDV-Schnittstelle 6 und damit über das Warenwirtschaftsdatensystem 8 verändern.

Zusammenfassend kann festgestellt werden, daß ein Einzelhandelsgeschäft - bestückt mit den Systemcontainern nach der Erfindung - mit äußerst geringem Personalaufwand, Flächenaufwand und mit einem zentralisierten Warenwirtschaftssystem betrieben werden kann, was dazu führt, daß kleine Läden, sogenannte "Tante-Emma-Läden" halten können, was in vorteilhafter Weise dazu führt, daß Innenstädte die für insbesondere den Seniorenbereich so wichtige Einkaufsstruktur behalten können und lange Wege zu Supermärkten am Stadtrand vermieden werden können.

### BEZUGSZEICHENLISTE

- 1, 1', 1": Container
- 2: Waren/Produkt
- 3: Produktaufnahmebereich
- 4: Öffnung
- 5: Informationseinrichtung
- 6: EDV-Schnittstelle von 1
- 7, 7': Warenabfertigungseinrichtung
- 8: Warenwirtschaftsdatensystem
- 9: Träger
- 10: Rollen
- 11: Geschäftsinformation
- 12: Aufstellungsortinformation
- 13: Produktinformation
- 14: Containeraustauschinformation
- 15: Leuchtmittel
- 16: Leuchtmittel
- 17: Transportmittel
- 18: Schnittstelle von 9
- 19: Informationselement
- 20: Kühlaggregat
- 21: Füllstandssensor
- 22: Beleuchtungseinrichtung

## Patentansprüche

1. Containersystem zum Transport sowie zur Präsentation und Lagerung von Waren (2) in Einzelhandelsgeschäften, aufweisend einen Containerkörper (1), der in einem Produktaufnahmebereich (3) mit Produkten (2) bestückbar ist und aus dem die Produkte (2) über eine Öffnung (4) entnehmbar sind, sowie einer Informationseinrichtung (5) am Containerkörper (1),
**dadurch gekennzeichnet, daß**
der Container (1) über eine EDV-Schnittstelle (6) mit einer elektronischen Warenabfertigungseinrichtung (7) des Einzelhandelsgeschäftes und/oder einem dem Einzelhandelsgeschäft übergeordneten elektronischen Warenwirtschaftsdatensystem (8) zum produktspezifischen Datentransfer verbunden ist, sowie an die Informationseinrichtung (5) des Containers (1) ein Signal zur Auslösung eines akustischen und/oder optischen Austauschsignal übertragbar ist, wenn die Warenabfertigungseinrichtung (7) und/oder das Warenwirtschaftsdatensystem (8) und/oder ein im Container (1) angeordneter Sensor (9) einen definierten Produktfüllstandswert ausgibt und/oder die im Warenwirtschaftsdatensystem (8) gespeicherten Produktverfallsdaten einen definierten Produktverfallsdatumswert erreicht oder überschritten haben.

2. Containersystem nach Anspruch 1,
**dadurch gekennzeichnet, daß**
die Produkte (2) in Trägern (9) angeordnet sind, die in Halteelemente innerhalb des Containers (1) einsetzbar sind.

3. Containersystem nach Anspruch 2,
**dadurch gekennzeichnet, daß**
die Träger (9) eine elektronische Schnittstelle (18) mit den Containern (1, 1', 1") aufweisen.

4. Containersystem nach einem der Ansprüche 1-3,
**dadurch gekennzeichnet, daß**
wenigstens ein Container (1) regalartig aufgebaut ist.

5. Containersystem nach einem der Ansprüche 1-4,
**dadurch gekennzeichnet, daß**
unterschiedliche Produkte (2) auf den Trägem (9) oder direkt in den Containern (1) angeordnet sind.

6. Containersystem nach einem der vorhergehenden Ansprüche,
**dadurch gekennzeichnet, daß**
über eine optische Anzeige der Informationseinrichtung (5) Geschäftsinformationen (11), Aufstellungsortinformationen (12) und/oder Produktinformationen (13) ausgebbar sind.

7. Containersystem nach einem der vorhergehenden Ansprüche,
**dadurch gekennzeichnet, daß**
die Container (1) mit Rollen (10), Gleitelementen und/oder mit handelsüblichen Hubwägen korrespondierenden Bereichen versehen sind.

8. Containersystem nach einem der vorhergehenden Ansprüche,
**dadurch gekennzeichnet, daß**
wenigstens ein Container (1) mit einem Kühlaggregat (20) versehen ist.

9. Containersystem nach einem der vorhergehenden Ansprüche,
**dadurch gekennzeichnet, daß**
wenigstens ein Container (1) mit einer Beleuchtungseinrichtung (22) versehen ist, die über eine Leistungsschnittstelle an ein elektrisches Netz anschließbar ist.

10. Containersystem nach Anspruch 9,
**dadurch gekennzeichnet, daß**
die Beleuchtungseinrichtung (22) hinsichtlich ihrer Beleuchtungsintensität sowie hinsichtlich unterschiedlicher Ausleuchtungsbereiche und/oder Beleuchtungsfarben regelbar ist.

11. Containersystem nach Anspruch 10,
**dadurch gekennzeichnet, daß**
die Beleuchtungsintensität, die Ausleuchtungsbereiche und/oder Beleuchtungsfarbe über die EDV-Schnittstelle (6) und/oder die Leistungsschnittstelle regelbar ist.

12. Containersystem nach einem der vorhergehenden Ansprüche,
**dadurch gekennzeichnet, daß**
innerhalb eines Containers (1) artverwandte Produkte (2) angeordnet sind.

13. Containersystem nach einem der vorhergehenden Ansprüche,
**dadurch gekennzeichnet, daß**
der Soll-Ist und/oder rechnerische ist Inhalt sämtlicher Container (1) eines Einzelhandelsgeschäftes über eine Ausgabeeinheit, die im entsprechenden Einzelhandelsgeschäft angeordnet ist, abfragbar ist.

14. Containersystem nach einem der vorhergehenden Ansprüche,
**dadurch gekennzeichnet, daß**
das Transportmedium zum Transport der Container (1) von einem Zentrallager zu dem Einzelhandelsgeschäft/Markt mit mindestens einer EDV- (6) und/oder Leistungsschnittstelle versehen ist.

15. Containersystem nach einem der vorhergehenden Ansprüche,
**dadurch gekennzeichnet, daß**
das Warenwirtschaftsdatensystem (8) die Containerfüllstandsdaten über den Abverlauf der Produkte (2) unter Einbindung der Warenabfertigungseinrichtung (7) ermittelt.
